# EUROPÄISCHE PATENTSCHRIFT

(11) **EP 2 372 599 B1**
(45) Veröffentlichungstag und Bekanntmachung des Hinweises auf die Patenterteilung: **07.11.2018**
(21) Anmeldenummer: 11158388.6
(22) Anmeldetag: 16.03.2011
(51) Int. Cl.: G06F 21/35, G06F 21/41, G06K 7/00

(54) **Elektronisches Gerät , Datenverarbeitungssystem und Verfahren zum Lesen von Daten aus einem elektronischen Gerät**
Electronic device, data processing system and method for reading data from an electronic device
Appareil électronique, système de traitement de données et procédé de lecture de données à partir d'un appareil électronique

(30) Priorität: 01.04.2010 DE 102010003581
(43) Veröffentlichungstag der Anmeldung: 05.10.2011
(73) Patentinhaber: Bundesdruckerei GmbH, 10958 Berlin (DE)
(72) Erfinder: Dietrich, Frank, 12437 Berlin (DE)
(74) Vertreter: Richardt Patentanwälte PartG mbB

(56) Entgegenhaltungen:
- EP-A1- 1 993 054
- DE-A1-102007 016 538
- DE-A1-102008 017 630
- US-A1- 2002 053 024

## Beschreibung

Die vorliegende Erfindung betrifft ein elektronisches Gerät, insbesondere ein tragbares Gerät, wie zum Beispiel ein Mobilfunkgerät, ein Datenverarbeitungssystem und ein Verfahren zum Lesen von Daten aus einem elektronischen Gerät.

Aus dem Stand der Technik ist die Speicherung von schutzbedürftigen Daten auf Chipkarten bekannt, die auch als Smartcards oder als Integrated Circuit (IC) Cards bezeichnet werden. Nachteilig ist hierbei, dass ein Benutzer die Chipkarte oder mehrere verschiedene Chipkarten für unterschiedliche Anwendungen mit sich führen muss.

DE 10 2007 016 538 A1 zeigt ein Kommunikations-Endgerät mit einer SIM-Karte, auf der eine Applikation gespeichert ist, die zur Kommunikation mit einer Kommunikationseinrichtung dient.

DE 10 2008 017 630 A1 zeigt ein mobiles Telekommunikations-Endgerät und ein System zur Authentisierung.

EP 1 993 054 A1 zeigt ein Verfahren zum Ausführen einer Software auf einem Endgerät.

Der Erfindung liegt demgegenüber die Aufgabe zugrunde, ein verbessertes elektronisches Gerät, ein Datenverarbeitungssystem und ein Verfahren zum Lesen von Daten aus einem elektronischen Gerät zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung wird ein elektronisches Gerät mit einer Kommunikations-Schnittstelle und Prozessormitteln zur Ausführung eines Programms geschaffen, wobei das Programm ausführbare Programminstruktionen und eine Datei beinhaltet.

Das elektronische Gerät hat ein Tamper Proof Module (TPM) zur Sicherung des Programms, insbesondere ein Trusted Plattform Modul. Das Programm ist zur Verarbeitung eines über die Kommunikations-Schnittstelle des elektronischen Geräts empfangenen Lesekommandos ausgebildet, wobei in dem Lesekommando Daten der Datei spezifiziert sind. Die ausgelesenen Daten werden über die Kommunikations-Schnittstelle ausgegeben.

Ausführungsformen der Erfindung sind besonders vorteilhaft, da das durch das TPM gesicherte Programm die Funktionalität eines Hardware-Tokens, insbesondere einer Chipkarte, zur Verfügung stellen kann. Hierbei ist besonders vorteilhaft, dass einerseits der Aufwand für die Produktion und Distribution von Chipkarten eingespart werden kann und dass andererseits das Mitführen von ein oder mehreren Chipkarten zusätzlich zu einem elektronischen Gerät entfallen kann.

Nach Ausführungsformen der Erfindung handelt es sich bei dem elektronischen Gerät um ein Mobilfunkgerät, insbesondere ein Mobiltelefon, ein Smartphone oder einen tragbaren Computer mit einer Mobilfunk-Schnittschnelle oder eine andere Batterie betriebene tragbare Electronic Appliance, wie zum Beispiel einen Personal Digital Assistant (PDA) oder eine elektronische Kamera. Von besonderem Vorteil ist hier, dass ein Nutzer üblicherweise ohnehin ein Mobiltelefon mit sich führt, welches nach Ausführungsformen der Erfindung zusätzlich zu seiner Mobilfunkfunktion auch die Funktion von ein oder mehreren Chipkarten zur Verfügung stellen kann.

Nach Ausführungsformen der Erfindung handelt es sich bei dem TPM um ein Trusted Plattform Modul. Das TPM kann als ein Hardware-Token, insbesondere als ein separater Chip, ausgebildet sein, der mit dem elektronischen Gerät fest verbunden ist. Beispielsweise ist in diesem Fall in den TPM ein erstes asymmetrisches kryptografisches Schlüsselpaar mit einem ersten Zertifikat gespeichert, durch welches die Identität des elektronischen Geräts bestimmt ist.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Beispielsweise kann das Zertifikat dem Standard X.509 oder einem anderen Standard entsprechen.

Alternativ kann es sich bei dem TPM um einen von dem elektronischen Gerät lösbaren und für verschiedene elektronische Geräte einsetzbaren Hardware-Token handeln, wie zum Beispiel um einen USB-Stick oder eine Chipkarte. In diesem Fall wird durch das erste asymmetrische kryptografische Schlüsselpaar und das erste Zertifikat der Nutzer, dem das TPM zugeordnet ist, identifiziert und nicht das elektronische Gerät. Insbesondere kann es sich bei dieser Ausführungsform bei dem TPM um eine Telekommunikations-Chipkarte, insbesondere um eine Subscriber Identity Module (SIM)-Karte handeln.

Nach einer Ausführungsform der Erfindung handelt es sich bei dem elektronischen Gerät um ein Mobilfunkgerät nach einem digitalen Mobilfunkstandard, wie zum Beispiel dem GSM oder UMTS Mobilfunkstandard. Eine standardkonforme Telekommunikations-Chipkarte, wie zum Beispiel eine SIM-Karte, kann bei dieser Ausführungsform als TPM zur Sicherung des Programms verwendet werden. Dies ist besonders vorteilhaft, da auf diese Art und Weise die ohnehin vorhandene Telekommunikations-Chipkarte eine weitere Funktion erhält, aufgrund derer der Nutzer auf die Mitführung von einer oder mehreren weiteren Chipkarten für verschiedene Anwendungen, wie zum Beispiel Ausweisfunktionen oder Bezahlfunktionen, verzichten kann.

Nach einer Ausführungsform der Erfindung ist die Kommunikations-Schnittstelle des elektronischen Geräts als RFID-Schnittstelle oder als NFC-Schnittstelle ausgebildet. Die Kommunikations-Schnittstelle kann auch als Netzwerk-Schnittstelle ausgebildet sein, insbesondere als drahtlose oder drahtgebundene Netzwerk-Schnittstelle. Beispielsweise kann es sich bei der Netzwerk-Schnittstelle um eine Mobilfunk-Schnittschnelle oder eine Ethernet-Schnittstelle handeln.

Nach einer Ausführungsform der Erfindung ist die Kommunikations-Schnittstelle zur Ausführung des Internetprotokolls (IP) ausgebildet, insbesondere als TCP/IP-Schnittstelle. Bei dieser Ausführungsform kann dem Programm ein vordefinierter IP-Port der TCP/IP-Schnittstelle zugeordnet sein. Zum Zugriff auf die in dem elektronischen Gerät gespeicherten Daten sendet das Lesegerät dann das Lesekommando an diesen vordefinierten IP-Port der TCP/IP-Schnittstelle, wodurch die Ausführung der Programminstruktionen gestartet wird.

Nach einer weiteren Ausführungsform der Erfindung ist die Kommunikations-Schnittstelle als Web-Service nach einem Web-Service-Standard ausgebildet. In diesem Fall kann der Web-Service das Lesekommando in Form eines Web-Service-Request, insbesondere als SOAP-Request empfangen.

Nach einer Ausführungsform der Erfindung handelt es sich bei dem Lesekommando um ein Chipkarten-Kommando. Die Kommunikations-Schnittstelle ist dabei vorzugsweise so ausgebildet, dass sie eine Standard-Chipkarten-Schnittstelle emuliert.

Dies hat den Vorteil, dass existente Chipkarten-Lesegeräte zum Lesen der Daten aus einem erfindungsgemäßen elektronischen Gerät verwendet werden können.

Nach einer Ausführungsform der Erfindung ist das TPM dazu ausgebildet, eine Signatur des Programms zu prüfen. Beispielsweise sind die Programminstruktionen und/oder die Datei und/oder die Daten oder ein daraus gebildeter HASH-Wert mit dem ersten privaten Schlüssel des TPM und dem ersten Zertifikat signiert. Bei der Signatur kann es sich insbesondere um signierte Speicherabbilder oder Ausschnitte daraus oder um signierte interne Zustände des elektronischen Geräts handeln. Sobald das Lesekommando empfangen wird, prüft das TPM die Gültigkeit dieser Signatur des Programms. Wenn die Signatur gültig ist, so gibt das TPM die Ausführung der Programminstruktionen frei; im gegenteiligen Fall wird die Ausführung der Programminstruktionen von dem TPM blockiert, sodass ein Zugriff auf die Daten verhindert wird.

Nach einer Ausführungsform der Erfindung sind die Datei und/oder die Daten von einem Trust-Center signiert.

Nach einer Ausführungsform der Erfindung sind die Datei und/oder die Daten mit einem zweiten öffentlichen Schlüssel, der zum Beispiel dem Lesegerät oder einer Chipkarte des Lesegeräts zugeordnet ist, verschlüsselt. Dies hat den besonderen Vorteil, dass ein Ausspähen der Datei und/oder der Daten aus dem elektronischen Gerät oder bei der Übertragung von dem elektronischen Gerät an das Lesegerät unterbunden wird.

Nach einer Ausführungsform der Erfindung sind die Datei und/oder die Daten mit Hilfe eines dritten kryptografischen Schlüsselpaars, beispielsweise von einem Trust-Center, signiert. Hierdurch wird in besonderem Maße die Vertrauenswürdigkeit der Gültigkeit der Datei bzw. der Daten sichergestellt.

Nach einer Ausführungsform der Erfindung werden die ausgelesenen Daten vor dem Senden an das Lesegerät durch das TPM mit Hilfe des ersten privaten Schlüssels und des ersten Zertifikats signiert. Dadurch wird die Vertrauenswürdigkeit weiter erhöht, da durch die Signatur die Sicherung des Programms durch das TPM dokumentiert wird.

Nach einer Ausführungsform der Erfindung handelt es sich bei der Datei um eine strukturierte Datei, die durch eine formale Beschreibungssprache, wie zum Beispiel XML oder ASN.1 definiert ist. Durch die Beschreibungssprache werden zum Beispiel Datenfelder der Datei definiert. Eine Instanz der so definierten Datei hat dann bestimmte Datenwerte in diesen Datenfeldern.

Bei den Datenwerten kann es sich zum Beispiel um Attribute handeln. Für eine Ausweisfunktion kann es sich hierbei um textuelle Angaben zu dem Namen, der Adresse etc. oder um Bilddaten für Gesichtsbilder und Fingerabdrücke handeln. Jeder einzelne Datenwert kann von der ausstellenden Instanz, insbesondere einem Trust-Center, verschlüsselt und/oder signiert sein sowie auch die gesamte Datei.

Ausführungsformen der Erfindung sind besonders vorteilhaft, da durch die Datei ein "Soft-Dokument" gegeben ist, d.h. ein virtuelles Dokument, das neben dem elektronischen Gerät und dem TPM keine weitere Hardware erfordert, und das dennoch die typischen Eigenschaften eines üblichen Wert- und Sicherheitsdokuments, wie Fälschungssicherheit und Sicherheit gegen unerlaubte Vervielfältigung, aufweist. Von ganz besonderem Vorteil ist dabei, dass das elektronische Gerät eine im Prinzip beliebige Anzahl solcher Soft-Dokumente tragen kann, die außerdem aktualisiert werden können, ohne dass die Hardware verändert werden muss.

Besonders vorteilhaft ist hierbei, dass durch das TPM ein Kopierschutz für die Datei gegeben ist. Beispielsweise ist die Datei und/oder das Programm, welches die Datei beinhaltet, mit einem privaten Schlüssel des TPM signiert, woduch eine feste und nicht lösbare Zuordnung der Datei zu dem TPM gegeben ist. Vor dem Zugriff auf die Datei oder dem Start des Programms wird durch das TPM geprüft, ob die Signatur valide ist; nur wenn dies der Fall ist, können Daten aus der Datei ausgelesen werden und an das Lesegerät übertragen werden.

In einem weiteren Aspekt betrifft die Erfindung ein Verfahren zum Lesen von Daten aus einem elektronischen Gerät mit den folgenden Schritten: Sicherung eines Programms des elektronischen Geräts mittels eines TPM, wobei das Programm ausführbare Programminstruktionen und eine Datei mit den Daten beinhaltet, Empfang eines Lesekommandos über eine Kommunikations-Schnittstelle des elektronischen Geräts, wobei in dem Lesekommando die auszulesenden Daten spezifiziert sind, Signierung der auszulesenden Daten durch das TPM mit Hilfe eines ersten kryptografischen Schlüsselpaars, welches den TPM zugeordnet ist, und Ausgabe der signierten Daten.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen elektronischen Geräts und eines erfindungsgemäßen Datenverarbeitungssystems,
- Figur 2: ein Flussdiagramm einer Ausführungsform eines erfindungsgemäßen Verfahrens.

Im Weiteren werden einander entsprechende Elemente der nachfolgenden Ausführungsformen mit denselben Bezugszeichen gekennzeichnet.

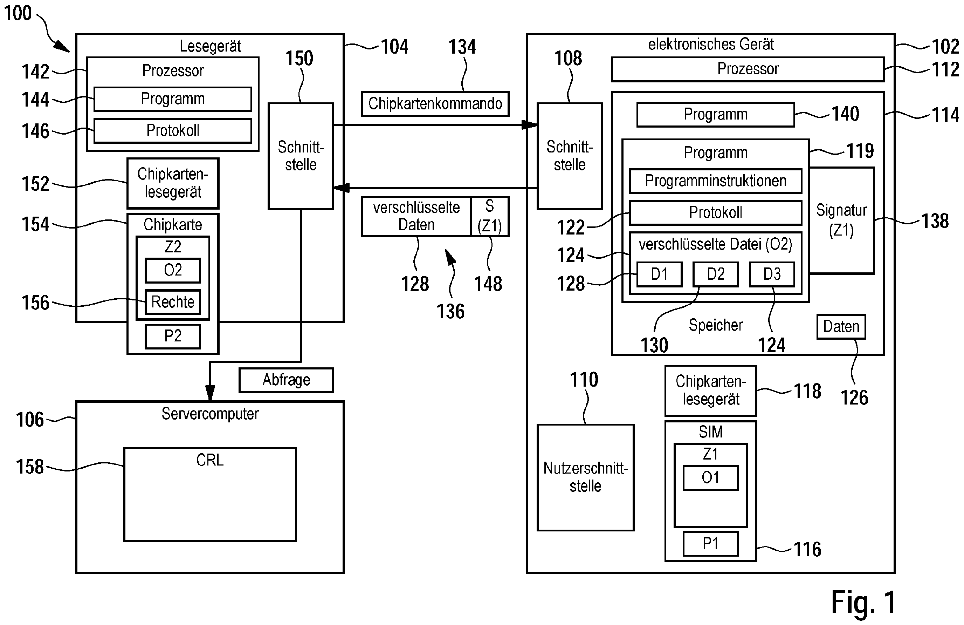

Figur 1 zeigt ein Blockdiagramm eines Datenverarbeitungssystems 100. Das Datenverarbeitungssystem beinhaltet ein elektronisches Gerät 102, ein Lesegerät 104 und optional einen Servercomputer 106.

Bei dem elektronischen Gerät 102 kann es sich um ein tragbares elektronisches Gerät, wie zum Beispiel ein Mobiltelefon, handeln. Das elektronische Gerät 102 hat eine Kommunikations-Schnittstelle 108. Diese kann beispielsweise nach einem digitalen Mobilfunkstandard ausgebildet sein sowie zur Ausführung des IP-Protokolls, insbesondere nach einem Mobile IP-Standard.

Das elektronische Gerät 102 hat eine Nutzer-Schnittstelle 110, die zum Beispiel ein Display und eine Tastatur aufweisen kann. Ferner hat das elektronische Gerät zumindest einen Prozessor 112 und einen elektronischen Speicher 114 sowie ein TPM.

Das TPM wird bei der hier betrachteten Ausführungsform durch eine SIM-Karte 116 gebildet, die sich in einem Chipkarten-Lesegerät 118 des elektronischen Geräts 102 befindet.

Der Prozessor 112 dient unter anderem zur Ausführung eines Programms, welches hier durch Programminstruktionen 120 und 122 sowie durch eine verschlüsselte Datei 124 gebildet wird. Die verschlüsselte Datei 124 ist in dem elektronischen Speicher 114 des elektronischen Geräts 102 gespeichert. In dem Speicher 114 können noch weitere Daten 126 gespeichert sein, insbesondere Nutzerdaten, wie zum Beispiel ein elektronisches Adressbuch oder andere Anwendungsdaten.

Die Datei 124 ist eine Instanz eines in seiner Struktur durch eine Beschreibungssprache definierten Dokuments. Bei der Beschreibungssprache kann es sich zum Beispiel um XML oder ASN.1 handeln. Die Datei 124 hat verschiedene, durch die Beschreibungssprache definierte Datenfelder, von denen in der Figur 1 die Datenfelder 128, 130 und 132 exemplarisch gezeigt sind, wobei diese Datenfelder mit Datenwerten D1, D2 bzw. D3 belegt sind. Bei den Datenwerten kann es sich zum Beispiel um Attributwerte handeln, wie zum Beispiel textuelle Angaben, oder um Bilddaten für Gesichtsbilder oder Fingerabdrücke. Die Datenwerte können separat verschlüsselt sein. Die Datenwerte können ferner einzeln signiert sein, und zwar beispielsweise von einem Trust-Center. Alternativ oder zusätzlich ist die Datei 124 insgesamt von dem Trust-Center signiert.

Die Programminstruktionen 120 des Programms 119 dienen zur Verarbeitung eines über die Kommunikations-Schnittstelle 108 empfangenen Lesekommandos 134, wobei das Lesekommando 134 die aus der Datei 124 auszulesenden verschlüsselten Daten spezifiziert. Die Programminstruktionen 120 dienen ferner dazu, eine Antwort 136 auf das Lesekommando 134 zu generieren und über die Kommunikations-Schnittstelle 108 zu senden.

Die Programminstruktionen 122 implementieren die das elektronische Gerät 102 betreffenden Schritte eines kryptografischen Protokolls zur Authentifizierung des Lesegeräts 104 gegenüber dem elektronischen Gerät 102. Zusätzlich kann auch eine Authentifizierung des elektronischen Geräts 102 gegenüber dem Lesegerät 104 vorgesehen sein. Bei dem kryptografischen Protokoll, welches von den Programminstruktionen 122 implementiert wird, kann es sich zum Beispiel um ein Challenge-Response-Protokoll handeln.

Das Programm 119 oder dessen Teile haben eine Signatur 138 des TPM, d.h. hier der SIM-Karte 116. Zur Erzeugung der Signatur 138 wird beispielsweise ein HASH-Wert aus den Programminstruktionen 120 und/oder der verschlüsselten Datei 124 gebildet, der dann von der SIM-Karte 116 mit Hilfe von deren privaten Schlüssel P1 verschlüsselt wird.

Der Prozessor 112 dient ferner zur Ausführung eines oder mehrerer weiterer Programme, wie zum Beispiel eines Programms 140, durch welches eine Mobilfunk-Funktionalität des elektronischen Geräts 102 zur Verfügung gestellt wird. Beispielsweise ist das Programm 140 dazu ausgebildet, auf die Daten 126 zuzugreifen.

In dem elektronischen Gerät 102 können weitere Programme gespeichert sein, die strukturell zu dem Programm 116 analog aufgebaut sind.

Beispielsweise wird durch die Programminstruktionen 120 eine Chipkartenfunktion implementiert. Durch das Programm 119, welches durch die SIM-Karte 116 gesichert ist, erhält das elektronische Gerät 102 also die Funktion einer Chipkarte mit einer bestimmten Chipkartenfunktion. Eine separate Chipkarte, durch die eine solche Chipkartenfunktion gegeben ist, ist also nicht mehr erforderlich, da diese nunmehr in das elektronische Gerät 102 integriert ist. Entsprechend können auch die Chipkartenfunktionen weiterer Chipkarten in das elektronische Gerät 102 integriert werden, indem weitere Programme des Typs des Programms 119, die entsprechenden Chipkartenfunktionen und Daten beinhalten, in dem elektronischen Gerät 102 gespeichert werden.

Das Programm 119 kann zum Beispiel Over the Air (OTA) von einem OTA-Server empfangen werden. Als Alternative zur Ausführung des Programms 119 durch den Prozessor 112 des elektronischen Geräts 102 kann dieses auch ganz oder teilweise von einem Prozessor der SIM-Karte 116 ausgeführt werden.

In der SIM-Karte 116 ist der private Schlüssel P1 und der öffentliche Schlüssel O1 eines ersten asymmetrischen kryptografischen Schlüsselpaars gespeichert, der dem Inhaber der SIM-Karte zugeordnet ist. Ferner ist in der SIM-Karte ein erstes Zertifikat Z1 gespeichert, welches den öffentlichen Schlüssel O1 beinhaltet.

Ferner kann in der SIM-Karte 116 ein Referenzwert für eine PIN gespeichert sein. Zur Freischaltung der SIM-Karte muss der Nutzer über die Nutzer-Schnittstelle 110 eine zutreffende PIN eingeben, die über das Chipkarten-Lesegerät in die SIM-Karte 116 eingegeben wird, sodass die SIM-Karte 116 die eingegebene PIN mit dem Referenzwert der PIN vergleichen kann.

Das Lesegerät 104 hat zumindest einen Prozessor 142 zur Ausführung von Programminstruktionen 144 und von Programminstruktionen 146. Die Programminstruktionen 144 dienen zur Erzeugung des Lesekommandos 134, was beispielsweise als Chipkarten-Kommando ausgebildet sein kann. Die Programminstruktionen 144 dienen ferner zur Verarbeitung der Antwort 136 des elektronischen Geräts 102 auf das Lesekommando 134. Die Antwort 136 kann beispielsweise die Datei 124 oder einzelne verschlüsselte Daten der Datei 124 sowie deren von der SIM-Karte 116 erzeugte Signatur 148 beinhalten.

Eine Kommunikations-Schnittstelle 150 des Lesegeräts 104 dient zum Senden des Lesekommandos 134 und zum Empfang der Antwort 136.

Bei der hier betrachteten Ausführungsform hat das Lesegerät 104 ein Chipkarten-Lesegerät 152 zum Lesen einer Chipkarte 154. In der Chipkarte 154 ist ein privater Schlüssel P2 und der dazugehörige öffentliche Schlüssel 02 eines asymmetrischen kryptografischen Schlüsselpaars gespeichert sowie ein Zertifikat Z2, welches den öffentlichen Schlüssel 02 sowie eine Rechtespezifikation 156 beinhaltet. Durch die Rechtespezifikation 156 sind Leserechte zum Lesen von ein oder mehreren der Datenwerte der Datei 124 spezifiziert.

Durch die Programminstruktionen 146 werden die das Lesegerät 104 betreffenden Schritte des kryptografischen Protokolls implementiert, beispielsweise also des Challenge-Response-Protokolls für eine einseitige oder gegenseitige Authentifizierung von Lesegerät 104 und elektronischem Gerät 102.

Das Datenverarbeitungssystem 100 beinhaltet ferner einen Servercomputer 106, in dem eine Certificate Revocation List (CRL) 158 gespeichert ist. Das Lesegerät 104 kann den Servercomputer 106 z.B. über seine Kommunikations-Schnittstelle 150 abfragen, um die Validität eines Zertifikats zu prüfen.

In das elektronische Gerät 102, wie zum Beispiel ein übliches Smartphone, kann eine Chipkartenfunktion, insbesondere die Funktion eines ID-Dokuments, eingebracht werden: Hierzu wird eine Instanz des Dokuments, d.h. die Datei 124 erzeugt und mit den persönlichen Angaben des Inhabers der SIM-Karte 116 personalisiert. Die daraus resultierenden Datenwerte, zum Beispiel D1, D2 und D3, werden von dem herausgebenden Trust-Center digital signiert und mit dem zweiten öffentlichen Schlüssel 02 einzeln verschlüsselt.

Das Programm 119 oder Teile davon werden mit Hilfe des privaten Schlüssels P1 der SIM-Karte 116 signiert, sodass die Signatur 138 erzeugt wird.

Der Nutzer des elektronischen Geräts 102 erhält die SIM-Karte 116 auf einem üblichen Weg, zum Beispiel per Post. Die SIM-Karte 116 wird von dem Nutzer in das Chipkarten-Lesegerät 116 des elektronischen Geräts 102 eingeführt. Das Programm 119 kann dann zum Beispiel von einem OTA-Server heruntergeladen und in dem elektronischen Gerät 102 installiert werden. Anschließend kann der Nutzer sein elektronisches Gerät ergänzend zu dessen eigentlicher Funktion zum Beispiel als ID-Dokument (Ausweisdokument) verwenden.

### Hierzu kann wie folgt vorgegangen werden:

Für eine Ausweisprüfung wird zwischen den Kommunikations-Schnittstellen 150 und 108 eine Kommunikationsverbindung aufgebaut. Durch Ausführung der Programminstruktionen 144 wird das Lesekommando 134 generiert und über die Kommunikationsverbindung an das elektronische Gerät 102 gesendet. Durch die SIM-Karte 116 wird dann geprüft, ob das Programm 119 unversehrt ist, oder ob ein Manipulationsversuch vorliegt. Hierzu wird beispielsweise so vorgegangen, dass die Validität der Signatur 138 geprüft wird. Hierzu bildet die SIM-Karte 116 aus dem in dem elektronischen Gerät 102 installierten Programm 119 einen HASH-Wert und verschlüsselt diesen HASH-Wert mit dem privaten Schlüssel P1. Die sich daraus ergebende Signatur muss mit der Signatur 138 übereinstimmen, damit das Programm 119 als unversehrt betrachtet werden kann. Wenn diese Bedingung erfüllt ist, gibt die SIM-Karte 116 die Ausführung des Programms 119 frei. Hierdurch ist ein Schutz des Programms 119 und der Datei 124 gegen Manipulationen sowie ein Kopierschutz gegeben.

Daraufhin wird die Ausführung der Programminstruktionen 122 zur Durchführung des kryptografischen Protokolls für die Authentifizierung zumindest des Lesegeräts 114 gegenüber dem elektronischen Gerät 102 gestartet.

Beispielsweise ist das Lesekommando 134 signiert, d.h. es beinhaltet das Zertifikat Z2 der Chipkarte 154. Durch Ausführung der Programminstruktionen 122 wird dann eine Challenge generiert, beispielsweise eine Zufallszahl. Diese Zufallszahl wird mit dem öffentlichen Schlüssel 02 des Zertifikats Z2 durch das elektronische Gerät 102 verschlüsselt und das resultierende Chiffrat wird über die Kommunikationsverbindung an das Lesegerät 104 gesendet. Durch Ausführung der Programminstruktionen 146 wird unter Zugriff auf die Chipkarte 154 das Chiffrat mit Hilfe des privaten Schlüssels P2 entschlüsselt und das Resultat der Entschlüsselung wird über die Kommunikationsverbindung von dem Lesegerät 104 an das elektronische Gerät 102 übertragen. Wenn das so von dem elektronischen Gerät 102 empfangene Resultat der Entschlüsselung mit der ursprünglichen Challenge übereinstimmt, so gilt das Lesegerät 104 damit als authentifiziert.

Durch Ausführung der Programminstruktionen 120 wird dann geprüft, ob die in der Rechtespezifikation 156 angegebenen Zugriffsrechte zum Lesen der in dem Lesekommando 134 spezifizierten Daten ausreichend sind. Wenn die zum Lesen der angeforderten Daten erforderlichen Rechte in dem Zertifikat Z2 spezifiziert sind, so wird durch Ausführung der Programminstruktionen 120 auf die betreffenden Daten in dem Speicher 114 zugegriffen.

Ohne Beschränkung der Allgemeinheit wird hier davon ausgegangen, dass in dem Lesekommando 134 der Datenwert D1 spezifiziert ist. Es wird dann der verschlüsselte Datenwert D1 aus dem Speicher 114 ausgelesen und von der SIM-Karte 116 mit dem privaten Schlüssel P1 signiert, sodass die Signatur 158 resultiert. Die Antwort 136 wird dann durch den verschlüsselten Datenwert D1 des Datenfeldes 128 und dessen Signatur 158 gebildet.

Durch Ausführung der Programminstruktionen 144 und durch Zugriff auf die Chipkarte 154 wird dann seitens des Lesegeräts 104 eine Entschlüsselung des verschlüsselten Datenwerts D1 mit Hilfe des privaten Schlüssels P2 durchgeführt. Ferner wird die Signatur 148 verifiziert. Hierzu wird durch das Lesegerät 104 eine Abfrage 160 der CRL 158 des Servercomputers 102 durchgeführt, um die Gültigkeit des Zertifikats Z1 zu prüfen. Wenn das Zertifikat Z1 gültig ist und die Signatur auch ansonsten valide ist, wird seitens des Lesegeräts 104 davon ausgegangen, dass der Datenwert D1 authentisch ist. Dieser Datenwert kann dann zum Beispiel auf einen Bildschirm des Lesegeräts 104 angezeigt, weiterverarbeitet oder über ein Netzwerk weitergesendet werden.

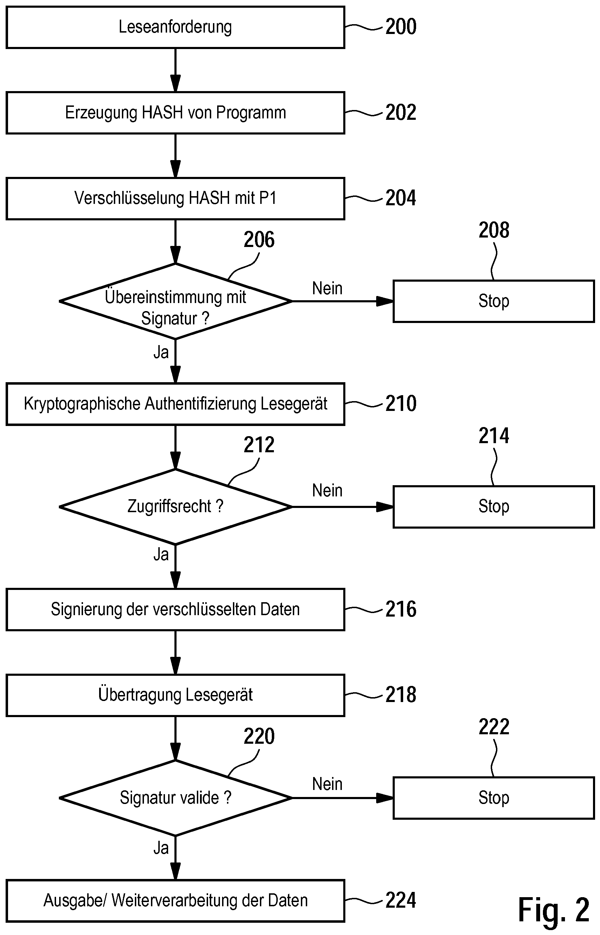

Die Figur 2 zeigt ein entsprechendes Flussdiagramm. In dem Schritt 200 empfängt das elektronische Gerät eine von dem Lesegerät signierte Leseanforderung. Daraufhin wird durch das TPM geprüft, ob das Programm unversehrt ist. Hierzu wird in dem Schritt 202 ein HASH-Wert des Programms oder eines Programmteils erzeugt und in dem Schritt 204 wird dieser HASH-Wert mit dem Schlüssel P1 des TPM verschlüsselt. In dem Schritt 206 wird geprüft, ob das Ergebnis der Verschlüsselung in dem Schritt 204 mit der Signatur des Programms übereinstimmt. Ist dies nicht der Fall, so wird in dem Schritt 208 der Ablauf abgebrochen.

Stimmen hingegen das Ergebnis der Verschlüsselung und die Signatur des Programms überein, so gilt das Programm als authentisch und in dem Schritt 210 erfolgt eine kryptografische Authentifizierung zumindest des Lesegeräts gegenüber dem elektronischen Gerät, beispielsweise mittels eines Challenge-Response-Protokolls. Zur Durchführung des Challenge-Response-Protokolls kann das mit der signierten Leseanforderung empfangene Zertifikat Z2, welches dem Lesegerät bzw. dessen Chipkarte zugeordnet ist, verwendet werden.

Nach einer erfolgreichen Authentifizierung des Lesegeräts wird in dem Schritt 212 geprüft, ob das Lesegerät die zum Lesen der in der Leseanforderung spezifizierten Daten erforderlichen Zugriffsrechte hat. Hierzu wird überprüft, ob die in dem Zertifikat beinhaltete Rechtespezifikation die zum Lesen der in der Leseanforderung spezifizierten Daten erforderlichen Rechte einräumt. Ist dies nicht der Fall, so erfolgt in dem Schritt 214 ein Abbruch; wenn die Zugriffsrechte hingegen ausreichend sind, wird auf die in der Leseanforderung spezifizierten verschlüsselten Daten der Datei durch das elektronische Gerät zugegriffen, und diese werden zum Beispiel in einem Arbeitsspeicher des elektronischen Geräts geladen.

Es erfolgt dann eine Signierung der betreffenden verschlüsselten Daten durch das TPM des elektronischen Geräts mit Hilfe des privaten Schlüssels P1 (Schritt 216). Die verschlüsselten und signierten Daten werden dann in dem Schritt 218 an das Lesegerät übertragen.

Das Lesegerät prüft in dem Schritt 220, ob die Signatur der verschlüsselten Daten valide ist. Hierzu wird auf eine CRL zugegriffen, um zu überprüfen, ob das Zertifikat Z1 der verschlüsselten Daten gültig ist. Ist dies nicht der Fall, so erfolgt in dem Schritt 222 ein Abbruch. Im gegenteiligen Fall erfolgt in dem Schritt 224 eine Entschlüsselung der verschlüsselten Daten mit Hilfe des privaten Schlüssels P2, auf den das Lesegerät Zugriff hat, und eine Ausgabe und/oder Weiterverarbeitung der ausgelesenen Daten.

### Bezugszeichenliste

- 100: Datenverarbeitungssystem
- 102: elektronisches Gerät
- 104: Lesegerät
- 106: Servercomputer
- 108: Kommunikations-Schnittstelle
- 110: Nutzer-Schnittstelle
- 112: Prozessor
- 114: Speicher
- 116: SIM-Karte
- 118: Chipkarten-Lesegerät
- 119: Programm
- 120: Programminstruktionen
- 122: Programminstruktionen
- 124: Datei
- 126: Daten
- 128: Datenfeld
- 130: Datenfeld
- 132: Datenfeld
- 134: Lesekommando
- 136: Antwort
- 138: Signatur
- 140: Programm
- 142: Prozessor
- 144: Programminstruktionen
- 146: Programminstruktionen
- 148: Signatur
- 150: Kommunikations-Schnittstelle
- 152: Chipkarten-Lesegerät
- 154: Chipkarte
- 156: Rechtespezifikation
- 158: Certificate Revocation List (CRL)
- 160: Abfrage

## Patentansprüche

1. Elektronisches Gerät mit
- einer Kommunikations-Schnittstelle (108),
- Prozessormitteln (112) zur Ausführung eines Programms (119), wobei das Programm ausführbare Programminstruktionen (120, 122) und eine Datei (124) beinhaltet, wobei durch die Programminstruktionen eine Chipkartenfunktion implementiert wird, so dass das elektronische Gerät die Funktion einer Chipkarte mit einer bestimmten Chipkartenfunktion erhält, wobei die Chipkartenfunktionen weiterer Chipkarten in das elektronische Gerät integriert sind, indem weitere Programme des Typs des Programms (119), die entsprechenden Chipkartenfunktionen und Daten beinhalten, in dem elektronischen Gerät gespeichert sind,
- einem TPM (116) zur Sicherung des Programms,
wobei das Programm zur Verarbeitung eines über die Kommunikations-Schnittstelle empfangenen Lesekommandos (134) und zur Ausgabe von durch das Lesekommando spezifizierte Daten (128) der Datei über die Kommunikations-Schnittstelle ausgebildet ist,
wobei das TPM dazu ausgebildet ist, eine Signatur (138) des Programms zu prüfen, wobei die Programminstruktionen nur dann ausgeführt werden, wenn die Signatur gültig ist.
wobei es sich bei dem Lesekommando um ein Chipkarten-Kommando handelt und die Kommunikations-Schnittstelle so ausgebildet ist, dass sie eine Standard-Chipkarten-Schnittstelle emuliert,
wobei es sich bei dem elektronischen Gerät um ein tragbares Gerät handelt.

2. Elektronisches Gerät nach Anspruch 1, wobei es sich um ein Mobilfunkgerät handelt, zum Beispiel ein Mobiltelefon, Smartphone oder einen tragbaren Computer mit Mobilfunk-Schnittstelle, und/oder wobei das TPM als Chipkarte, insbesondere als Telekommunikations-Chipkarte, beispielsweise als SIM-Karte, ausgebildet ist, wobei die Kommunikations-Schnittstelle insbesondere als RFID-Schnittstelle, NFC-Schnittstelle oder Netzwerk-Schnittstelle ausgebildet ist, und/oder wobei die Kommunikations-Schnittstelle insbesondere als TCP/IP-Schnittstelle ausgebildet ist, und wobei das Programm vorzugsweise einem vordefinierten IP-Port zugeordnet ist, wobei das Programm vorzugsweise aufgrund des Empfangs des Lesekommandos an dem vordefinierten IP-Port gestartet wird und/oder wobei die Kommunikations-Schnittstelle insbesondere als Web-Service ausgebildet ist, sodass das Lesekommando insbesondere in Form eines Web-Service-Request empfangbar ist.

3. Elektronisches Gerät nach einem der vorhergehenden Ansprüche, wobei dem TPM ein erstes Zertifikat (Z1) und ein erstes asymmetrisches kryptografisches Schlüsselpaar (O1, P1) zugeordnet ist, wobei das TPM dazu ausgebildet ist, die Signatur mit Hilfe des ersten kryptografischen Schlüsselpaars und des ersten Zertifikats zu prüfen.

4. Elektronisches Gerät nach einem der vorhergehenden Ansprüche, wobei die Daten mit einem öffentlichen Schlüssel (02) eines zweiten kryptografischen Schlüsselpaars (02, P2) verschlüsselt sind.

5. Elektronisches Gerät nach einem der vorhergehenden Ansprüche, wobei das TPM dazu ausgebildet ist, die Datei und/oder die Daten vor der Ausgabe über die Kommunikations-Schnittstelle mit Hilfe des ersten Zertifikats zu signieren.

6. Datenverarbeitungssystem mit einem elektronischen Gerät (102) nach einem der vorhergehenden Ansprüche und einem Lesegerät (104), wobei das Lesegerät eine Kommunikations-Schnittstelle (150) zum Aufbau einer Kommunikationsverbindung mit der Kommunikations-Schnittstelle des elektronischen Geräts, Prozessormittel (142) zur Generierung des Lesekommandos (134) und zum Empfang der Daten (128) über die Kommunikationsverbindung aufweist.

7. Datenverarbeitungssystem nach Anspruch 6, wobei das Lesegerät zur Prüfung der Signatur der Datei und/oder der Daten ausgebildet ist, und mit einem Servercomputer (106), in dem eine CRL (158) gespeichert ist, und auf den von dem Lesegerät aus zugegriffen werden kann.

8. Datenverarbeitungssystem nach Anspruch 6 oder 7, wobei die Prozessormittel des Lesegeräts und die Prozessormittel des elektronischen Geräts zur Ausführung eines kryptografischen Protokolls (122, 144) für die Authentifizierung des Lesegeräts gegenüber dem elektronischen Gerät ausgebildet sind.

9. Datenverarbeitungssystem nach Anspruch 8, wobei dem Lesegerät ein zweites Zertifikat (Z2) zugeordnet ist, in dem Zugriffsrechte des Lesegeräts auf die Daten spezifiziert sind, wobei das kryptografische Protokoll mit Hilfe des zweiten Zertifikats durchgeführt wird.

10. Verfahren zum Lesen von Daten aus einem tragbaren elektronischen Gerät (102) mit folgenden Schritten:
- Sicherung eines Programms (119) des elektronischen Geräts mittels eines TPM (116), wobei das Programm ausführbare Programminstruktionen (120, 122) und eine Datei (124) mit den Daten beinhaltet, wobei durch die Programminstruktionen eine Chipkartenfunktion implementiert wird, so dass das elektronische Gerät die Funktion einer Chipkarte mit einer bestimmten Chipkartenfunktion erhält, wobei die Chipkartenfunktionen weiterer Chipkarten in das elektronische Gerät integriert sind, indem weitere Programme des Typs des Programms (119), die entsprechenden Chipkartenfunktionen und Daten beinhalten, in dem elektronischen Gerät gespeichert sind,
- Empfang eines Lesekommandos (134) über eine Kommunikations-Schnittstelle des elektronischen Geräts, wobei in dem Lesekommando die auszulesenden Daten spezifiziert sind, wobei es sich bei dem Lesekommando um ein Chipkarten-Kommando handelt und die Kommunikations-Schnittstelle so ausgebildet ist, dass sie eine Standard-Chipkarten-Schnittstelle emuliert,
- Verarbeitung des über die Kommunikations-Schnittstelle empfangenen Lesekommandos durch Ausführung der Programminstruktionen,
- Signierung der auszulesenden Daten durch das TPM mit Hilfe eines ersten kryptografischen Schlüsselpaars (O1, P1), welches dem TPM zugeordnet ist,
- Ausgabe der signierten Daten durch Ausführung der Programminstruktionen,
wobei das TPM dazu ausgebildet ist, eine Signatur (138) des Programms zu prüfen, wobei die Programminstruktionen nur dann ausgeführt werden, wenn die Signatur gültig ist.

11. Verfahren nach Anspruch 10, wobei die Datei und/oder die Daten von einem Trust-Center signiert sind und wobei die Daten und/oder die Datei mit Hilfe eines öffentlichen Schlüssels (02) eines zweiten kryptografischen Schlüsselpaars (02, P2) verschlüsselt sind.

12. Verfahren nach Anspruch 10 oder 11, wobei die Daten durch das TPM gegen Manipulationen geschützt werden.

13. Verfahren nach Anspruch 10, 11 oder 12, wobei die Daten dem TPM fest zugeordnet sind, wodurch ein Kopierschutz gegeben ist.

## Claims

1. An electronic device comprising
- a communication interface (108),
- processor means (112) for executing a program (119), wherein the program contains executable program instructions (120, 122) and a file (124), wherein a chip card function is implemented by the program instructions, such that the electronic device attains the function of a chip card with a specific chip card function, wherein the chip card functions of further chip cards are integrated in the electronic device in that further programs of the same type as the program (119) which contain corresponding chip card functions and data are stored in the electronic device,
- a TPM (116) for securing the program,
wherein the program is designed to process a read command (134) received via the communication interface and to output data (128), specified by the read command, of the file via the communication interface,
wherein the TPM is designed to check a signature (138) of the program, wherein the program instructions are executed only if the signature is valid,
wherein the read command is a chip card command and the communication interface is designed such that it emulates a standard chip card interface,
wherein the electronic device is a portable device.

2. Electronic device according to claim 1, wherein it is a mobile communication device, for example a mobile telephone, smartphone, or a portable computer with mobile communication interface, and/or wherein the TPM is designed as a chip card, in particular as a telecommunication chip card, for example as a SIM card, wherein the communication interface is designed in particular as an RFID interface, NFC interface or network interface, and/or wherein the communication interface is designed in particular as a TCP/IP interface, and wherein the program is preferably associated with a predefined IP port, wherein the program is preferably started on account of the receipt of the read command at the predefined IP port, and/or wherein the communication interface is designed in particular as a web service, such that the read command can be received in particular in the form of a web service request.

3. The electronic device according to any one of the preceding claims, wherein the TPM is assigned a first certificate (Z1) and a first asymmetric cryptographic key pair (O1, P1), wherein the TPM is designed to check the signature with the aid of the first cryptographic key pair and the first certificate.

4. The electronic device according to any one of the preceding claims, wherein the data are encrypted using a public key (02) of a second cryptographic key pair (02, P2).

5. The electronic device according to any one of the preceding claims, wherein the TPM is designed to sign the file and/or the data with the aid of the first certificate before said file and/or data is/are output via the communication interface.

6. A data processing system comprising an electronic device (102) according to any one of the preceding claims and a reader (104), wherein the reader has a communication interface (150) for establishing a communication connection to the communication interface of the electronic device, processor means (142) for generating the read command (134) and for receiving the data (128) via the communication link.

7. The data processing system according to claim 6, wherein the reader is designed to check the signature of the file and/or of the data, said data processing system also comprising a servocomputer (106), in which a CRL (158) is stored and which can be accessed by the reader.

8. The data processing system according to claim 6 or 7, wherein the processor means of the reader and the processor means of the electronic device are designed to execute a cryptographic protocol (122, 144) for authenticating the reader to the electronic device.

9. The data processing system according to claim 8, wherein the reader is assigned a second certificate (Z2), in which access rights of the reader to the data are specified, wherein the cryptographic protocol is executed with the aid of the second certificate.

10. A method for reading data from a portable electronic device (102), comprising the following steps:
- securing a program (119) of the electronic device by means of a TPM (116), wherein the program contains executable program instructions (120, 122) and a file (124) with the data, wherein a chip card function is implemented by the program instructions, such that the electronic device attains the function of a chip card with a specific chip card function, wherein the chip card functions of further chip cards are integrated in the electronic device in that further programs of the same type as the program (119) which contain corresponding chip card functions and data are stored in the electronic device,
- receiving a read command (134) via a communication interface of the electronic device, wherein data to be read are specified in the read command, wherein the read command is a chip card command and the communication interface is designed such that it emulates a standard chip card interface,
- processing the read command received via the communication interface by executing the program instructions,
- signing, by the TPM, the data to be read with the aid of a first cryptographic key pair (O1, P1) assigned to the TPM,
- outputting the signed data by executing the program instructions,
wherein the TPM is designed to check a signature (138) of the program, wherein the program instructions are executed only if the signature is valid.

11. The method according to claim 10, wherein the file and/or the data is/are signed by a trust centre, and wherein the data and/or the file are/is encrypted with the aid of a public key (02) of a second cryptographic key pair (02, P2).

12. The method according to claim 10 or 11, wherein the data are protected by the TPM against manipulation.

13. The method according to claim 10, 11 or 12, wherein the data are fixedly assigned to the TPM, whereby copy protection is provided.

## Revendications

1. Appareil électronique doté
- d'une interface de communication (108),
- de moyens de processeur (112) pour l'exécution d'un programme (119), où le programme contient des instructions de programme (120, 122) exécutables et une donnée (124), où une fonction de carte à puce est mise en oeuvre par les instructions de programme de sorte que l'appareil électronique obtient la fonction d'une carte à puce avec une fonction de carte à puce déterminée, où les fonctions de carte à puce d'autres cartes à puce sont intégrées dans l'appareil électronique en ce que d'autres programmes du type de programme (119), qui contiennent les fonctions de carte à puce et les données correspondantes sont stockés dans l'appareil électronique,
- d'une maintenance productive totale TPM (116) pour la sécurisation du programme,
où le programme est conçu pour le traitement d'une commande de lecture (134) reçue par le biais de l'interface de communication et pour l'édition de données (128) spécifiées par la commande de lecture de la donnée par le biais de l'interface de communication,
où la TPM est conçue pour vérifier une signature (138) du programme, où les instructions de programme ne sont effectuées que si la signature est valide,
où, dans le cas de la commande de lecture, il s'agit d'une commande de carte à puce et l'interface de communication est conçue de telle manière qu'elle imite une interface de carte à puce normalisée,
où, dans le cas de l'appareil électronique, il s'agit d'un appareil portable.

2. Appareil électronique selon la revendication 1, où il s'agit d'un appareil radio mobile, par exemple, un téléphone mobile, un Smartphone ou un autre ordinateur portable avec une interface radio mobile, et/ou dans lequel la TPM est conçue sous forme d'une carte à puce, notamment, sous forme d'une carte à puce de télécommunication, par exemple, sous forme de carte SIM, où l'interface de communication est conçue en particulier sous forme d'interface RFID, d'interface NFC ou d'interface réseau, et/ou dans lequel l'interface de communication est conçue en particulier sous forme d'interface TCP/IP, et où le programme est associé de préférence à un port IP prédéfini, où le programme est démarré de préférence, en raison de la réception de la commande de lecture, au niveau du port IP prédéfini, et/ou où l'interface de communication est en particulier conçue sous forme de service web, de sorte que la commande de lecture peut être réceptionnée en particulier sous la forme d'une requête de service web.

3. Appareil électronique selon l'une des revendications précédentes, dans lequel un premier certificat (Z1) et une première paire de clés cryptographiques (O1, P1) asymétrique sont associés à la TPM, où la TPM est conçue pour vérifier la signature à l'aide de la première paire de clés cryptographiques et du premier certificat.

4. Appareil électronique selon l'une des revendications précédentes, dans lequel les données sont cryptées avec une clé publique (02) d'une deuxième paire de clés cryptographiques (02, P2).

5. Appareil électronique selon l'une des revendications précédentes, dans lequel la TPM est conçue pour signer la donnée et/ou les données avant l'édition par le biais de l'interface de communication à l'aide du premier certificat.

6. Système de traitement de données avec un appareil électronique (102) selon l'une des revendications précédentes et un lecteur (104), où le lecteur présente une interface de communication (150) pour l'établissement d'une connexion de communication avec l'interface de communication de l'appareil électronique, des moyens de processeur (142) pour la production de la commande de lecture (134) et pour la réception des données (128) par le biais de la connexion de communication.

7. Système de traitement de données selon la revendication 6, dans lequel le lecteur est conçu pour la signature de la donnée et/ou des données, et est doté d'un ordinateur serveur (106) dans lequel est stockée une liste CRL (158) et vis-à-vis duquel on peut avoir accès par le lecteur.

8. Système de traitement de données selon la revendication 6 ou 7, dans lequel les moyens de processeur du lecteur et les moyens de processeur de l'appareil électronique sont conçus pour l'exécution d'un protocole cryptographique (122, 144) pour l'authentification du lecteur vis-à-vis de l'appareil électronique.

9. Système de traitement de données selon la revendication 8, dans lequel un deuxième certificat (Z2) est associé au lecteur, dans lequel les droits d'accès du lecteur pour les données sont spécifiés, où le protocole cryptographique est exécuté à l'aide du deuxième certificat.

10. Procédé de lecture de données à partir d'un appareil électronique portable (102) avec les étapes suivantes :
- de sécurisation d'un programme (119) de l'appareil électronique au moyen d'une TPM (116), où le programme contient des instructions de programme (120, 122) et une donnée (124) avec des données, où une fonction de carte à puce est mise en oeuvre par les instructions de programme de sorte que l'appareil électronique obtient la fonction d'une carte à puce avec une fonction de carte à puce déterminée, où les fonctions de carte à puce d'autres cartes à puce sont intégrées dans l'appareil électronique en ce que d'autres programmes du type de programme (119), qui contiennent les fonctions de carte à puce et les données correspondantes sont stockés dans l'appareil électronique,
- de réception d'une commande de lecture (134) par le biais d'une interface de communication de l'appareil électronique, où des données à lire sont spécifiées dans la commande de lecture, où, dans le cas de la commande de lecture, il s'agit d'une commande de carte à puce et l'interface de communication est conçue de telle manière qu'elle imite une interface de carte à puce normalisée,
- de traitement de la commande de lecture reçue par le biais de l'interface de communication par l'exécution des instructions de programme,
- de signature des données devant être lues par la TPM à l'aide d'une première paire de clés cryptographiques (O1, P1), à laquelle est associée la TPM,
- d'édition des données signées par l'exécution des instructions de programme,
où la TPM est conçue pour vérifier une signature (138) du programme, où les instructions de programme ne sont effectuées que si la signature est valide.

11. Procédé selon la revendication 10, dans lequel la donnée, et/ou les données, sont signées par un centre de confiance et où la donnée, et/ou les données, sont cryptées à l'aide d'une clé publique (02) d'une deuxième paire de clés cryptographiques (02, P2).

12. Procédé selon la revendication 10 ou 11, dans lequel les données sont protégées contre des manipulations par la TPM.

13. Procédé selon la revendication 10, 11 ou 12, dans lequel les données sont définitivement associées à la TPM, ce par quoi une protection contre la copie est obtenue.
